(19) Europäisches Patentamt European Patent Office Office européen des brevets

(11) **EP 3 054 518 A1**

(12) **EUROPEAN PATENT APPLICATION**

(43) Date of publication:
**10.08.2016 Bulletin 2016/32**

(51) Int Cl.:
***H01M 8/10*** *(2006.01)*  ***H01M 8/18*** *(2006.01)*

(21) Application number: **15154151.3**

(22) Date of filing: **06.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Paul Scherrer Institut**
**5232 Villigen (CH)**

(72) Inventors:
• **Gubler, Lorenz**
**5417 Untersiggenthal (CH)**
• **Nibel, Olga**
**79639 Grenzach-Wyhlen (DE)**
• **Bonorand, Lukas**
**5408 Ennetbaden (CH)**

(74) Representative: **Fischer, Michael**
**Siemens AG**
**Postfach 22 16 34**
**80506 München (DE)**

(54) **ELECTROLYTE MEMBRANE WITH SELECTIVE ION TRANSPORT PROPERTIES AND A REDOX FLOW BATTERY COMPRISING AN ELECTROLYTE MEMBRANE**

(57)     It is the objective of the present invention to provide a membrane with high ion selectivity, high physicochemical stability and low cost is of vital importance.

This objective is achieved according to the present invention by an ion exchange membrane with selective ion transport properties, in particular for use in a redox flow battery, comprising:
a) a mechanically robust and chemically resistant base polymer film (matrix);
b) ion exchange groups covalently bound to the polymer matrix, being anion exchange groups or cation exchange groups or a mixture thereof;
c) blocking groups covalently bound to the polymer matrix preventing the passage of redox-active species across the membrane; and
d) optionally additional functional constituents, such as crosslinkers or antioxidants;

Therefore, this membrane has a high ion selectivity, high physicochemical stability and low cost due to the selection of a base polymer film and the ion exchange groups as well as the blocking groups preventing the passage of redox-active species across the membrane.

Preferably, the membrane is produced via radiation induced grafting, comprising the steps of:
a) exposing the base polymer to ionizing radiation to introduce active sites;
b) exposing the irradiated base polymer to a mixture of monomers comprising i) a monomer containing an ion exchange group or a precursor monomer yielding an ion exchange group in a subsequent step, ii) a monomer containing a functional group to block the passage of redox-active species through the membrane or a precursor monomer yielding the functional blocking group in a subsequent reaction step; iii) optional additional monomers, such as a crosslinker and antioxidant; and
c) in case of the use of precursor monomers for ion exchange sites and blocking groups, post-treatment of the grafted film to introduce ion exchange sites and/or blocking groups is performed.

Fig. 5

## Description

The present invention describes an improved electrolyte membrane, in particular for redox flow batteries (RFBs).

Redox flow batteries consist of two electrolyte solutions on the positive and negative electrode, separated by an ion exchange membrane. The electrolyte solutions contain redox couples, typically charged species (ions), which allows the storage of electrical energy (during charging) and the generation of electrical energy (during discharge). The ion exchange membrane is required to allow the passage of desired ions and prevent the passage for ions involved in the energy storage as well as solvent. Moreover, the membrane ought to be of low cost, mechanically robust, and stable in the respective chemical environment.

Redox flow batteries, originally developed in the 1970s, are being considered as energy storage devices in the context of buffering supply and demand of electricity on various capacity levels, ranging from small units designed for single family homes up to units installed for grid-level electricity storage. The general assets of redox flow cells are high energy conversion efficiency, flexible design, high energy storage capacity, flexible location, deep discharge capability, and low maintenance cost compared with other energy storage technologies.

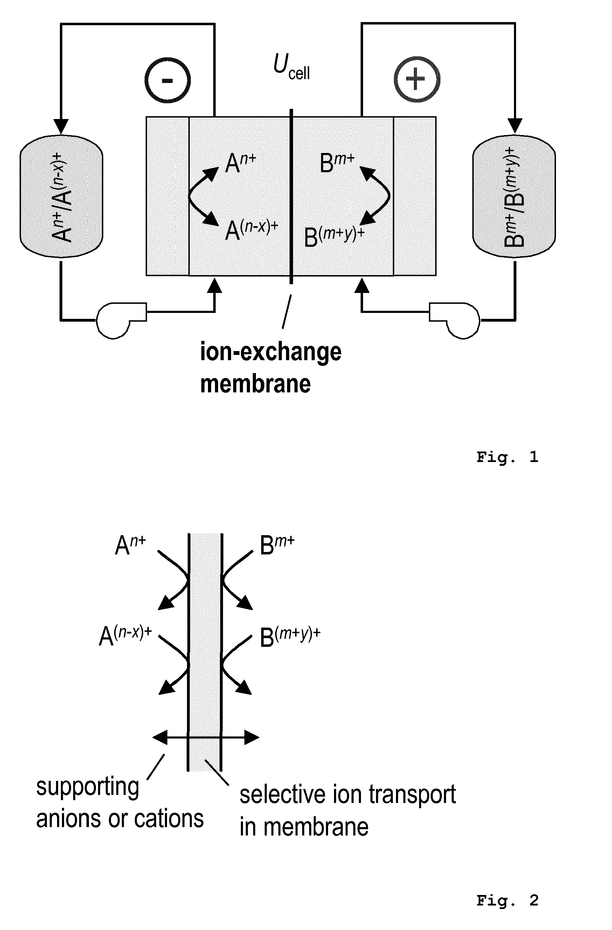

A redox flow battery uses two soluble redox couples as electroactive materials to store energy via oxidation and reduction reactions. In a typical set-up, the redox flow battery consists of 2 electrolyte reservoirs from which the electrolytes are circulated by pumps through an electrochemical reactor, consisting of a cell stack comprising a number of cells connected in series or parallel to enable reaction taking place at inert electrodes (Figure 1). Figure 1 shows schematically a representation of a redox flow battery (RFB), comprising an ion-exchange polymer as electrolyte membrane. Typically, each cell comprises of negative electrode, positive electrode and an ion exchange membrane separator to allow diffusion of ions across the membrane while preventing the cross-mixing of the electrolyte solutions from these 2 reservoirs. The electrolytes contain redox-active species which can change their oxidation state reversibly upon charge and discharge. These active species are commonly multivalent ionic species, such as transition metal ions. The type of redox couple used in the electrolyte and the concentration of the species in their different respective oxidation states determine the electrochemical potential on the particular electrode. The potential difference between the negative and positive electrode, which is achieved by choice of different redox couples on the two sides, determines the electromotive force or voltage of the cell. The voltage of the cell is therefore specific to the chemical species involved in the reactions. The general reactions can be written as

$$A^{n+} + x \cdot e^- \leftrightarrow A^{(n-x)+} \qquad (n > x)$$

$$B^{m+} - y \cdot e^- \leftrightarrow B^{(m+y)+} \qquad (m > y)$$

for the negative and positive electrode, respectively, where charge = $\rightarrow$ and discharge = $\leftarrow$. Examples of flow battery chemistries are the iron/chromium cell with $Cr^{2+}/Cr^{3+}$ ($E° = -0.41$ V vs. SHE) on the negative electrode and $Fe^{2+}/Fe^{3+}$ on the positive electrode ($E° = 0.77$ V vs. SHE), the bromine/polysulfide cell with $S_2^{2-}/S_4^{2-}$ ($E° = -0.27$ V vs. SHE) on the negative electrode and $Br^-/Br_3^-$ on the positive electrode ($E° = 1.09$ V vs. SHE), and the all-vanadium cell with $V^{2+}/V^{3+}$ ($E° = -0.26$ V vs. SHE) on the negative electrode and $VO^{2+}/VO_2^+$ on the positive electrode ($E° = 1.00$ V vs. SHE).

The energy capacity of the redox flow battery is fully independent of its power, because the energy available is related to the electrolyte volume (amount of liquid electrolyte) and the power to the surface area of the electrodes.

In addition, the flow battery unit includes balance-of-plant components, such as pumps, tubing, power electronics, etc., to constitute an independent system. The repetitive unit of the stack of cells is made up of a polymer electrolyte, typically a cation or anion exchange membrane, which is sandwiched between flow field plates, through which the electrolyte solutions are pumped. As electrodes, porous carbon fibre structures are used.

The primary function of the electrolyte membrane is to provide pathways for ion conduction to ensure charge balance between positive and negative electrode. However, the passage of redox-active species, such as the transition metal ions, is not desired, as this leads to a cross-contamination of the electrolytes and a decrease in faradaic efficiency of the cell. The positive and negative electrolytes contain a common ion, for instance through the presence of supporting electrolyte, whose transport through the electrolyte is desired to ensure charge balance. Typically, the electrolytes used are aqueous solutions of redox couples, for instance $V^{3+}/V^{4+}$ and $VO^{2+}/VO_2^+$ (see above), and sulfuric acid is used as a background electrolyte. In this case, the membrane should allow the passage of $H^+$ or (bi)sulfate anions (either cation or anion exchange membrane) and prevent the crossover of vanadium species.

As electrolyte membrane, typically dense ion exchange membranes are used, cation exchange membranes or anion exchange membranes. The resistance of the membrane should be as low as possible to minimize ohmic losses, concurrently the membrane should have a low permeability for the redox-active species. Moreover, the membrane should be mechanically robust, chemically stable in the respective electrolyte solution, and be of low cost. In case of the use of cation redox couples in the electrolytes, the use of an anion exchange membrane suggests itself, as these type of ionomer membranes largely reject cations due to Donnan exclusion. However, the chemical stability of anion exchange membranes is often insufficient. Cation exchange membranes are therefore more widely used. A typical and common cation exchange membrane is Nafion®, which is a perfluoroalkylsulfonic acid ionomer. Nafion® membranes are very widely used in RFBs, despite its high cost and high permeability for transition metal ions and water.

Therefore, it is the objective of the present invention to provide a membrane with high ion selectivity, high physicochemical stability and low cost which is of vital importance, too.

This objective is achieved according to the present invention by an ion exchange membrane with selective ion transport properties, in particular for use in a redox flow battery, comprising:

a) a mechanically robust and chemically resistant base polymer film (matrix);
b) ion exchange groups covalently bound to the polymer matrix, being anion exchange groups or cation exchange groups or a mixture thereof;
c) blocking groups covalently bound to the polymer matrix preventing the passage of redox-active species across the membrane; and
d) optionally additional functional constituents, such as crosslinkers or antioxidants;

Therefore, this membrane has a high ion selectivity, high physicochemical stability and low cost due to the selection of a base polymer film and the ion exchange groups as well as the blocking groups preventing the passage of redox-active species across the membrane.

Preferably, the membrane is produced via radiation induced grafting, comprising the steps of:

a) exposing the base polymer to ionizing radiation to introduce active sites;
b) exposing the irradiated base polymer to a mixture of monomers comprising i) a monomer containing an ion exchange group or a precursor monomer yielding an ion exchange group in a subsequent step, ii) a monomer containing a functional group to block the passage of redox-active species through the membrane or a precursor monomer yielding the functional blocking group in a subsequent reaction step; iii) optional additional monomers, such as a crosslinker and antioxidant; and
c) in case of the use of precursor monomers for ion exchange sites and blocking groups, post-treatment of the grafted film to introduce ion exchange sites and/or blocking groups.

With respect to chemical stability, cost and ion conductivity, the base polymer can be a semi-crystalline fluoropolymer.

For the pre-treatment prior to the grafting, the ionizing radiation can be an electron beam with energy above 100 keV.

Preferably, the monomer used as a precursor monomer to yield ion exchange sites is styrene, $\alpha$-methylstyrene or vinylbenzylchloride.

Further, the monomer used as a precursor monomer to yield blocking sites is acrylonitrile, methacrylonitrile or glycidylmethacrylate.

Advantageously, the ion exchange site is a sulfonic acid group, introduced to the styrenic grafted monomer units via sulfonation followed by hydrolysis.

Alternatively, the ion exchange site is a quaternary ammonium group, introduced to the vinylbenzyl chloride grafted monomer units via quaternization.

A further preferred embodiment of the present invention may provide blocking sites that are created by amidoximation of acrylonitrile or methacrylonitrile units in the grafted chains. Another option may provide the blocking sites being created by amination of glycicyl methacrylate units in the grafted chains. Alternatively, the blocking sites may be also created by the reaction of glycicyl methacrylate units in the grafted chains with iminodiacetate, phosphoric acid, L-amino acid, or trialkylamine.

A superior redox flow battery is achieved according to the present invention by a redox flow battery comprising a membrane according to any of the claims 1 to 11 is used as a membrane electrolyte. Preferred redox flow batteries can be achieved when the negative electrolyte solution consists of an aqueous solution of sulfuric acid as background electrolyte and $V^{2+}/V^{3+}$ as redox-active species, and wherein the positive electrolyte solution consists of an aqueous solution of sulfuric acid as background electrolyte and $VO^{2+}/VO_2^+$ as redox-active species. The membrane as claimed by the present invention therefore has the advantage over the prior art that the membrane shows less crossover of redox-active species than a comparable membrane without blocking groups.

Preferred examples of the present invention are discussed hereinafter in detail with reference to the attached drawings which depict in:

Figure 1    schematically a representation of a redox flow battery (RFB), comprising an ion-exchange polymer as electrolyte membrane;

Figure 2    a sketch of the primary target of the present invention in terms of conductivity and blocking of the redox active components to cross the membrane;

Figure 3    a schematic structure of the graft copolymer consisting of the intert base polymer and grafted functional units;

Figure 4    a schematic representation of the structure of the ionogenic group;

Figure 5    a schematic representation of the preferred structure of the blocking groups for redox-active transition-metal ion species;

Figure 6    polarization curves of the redox flow cell measured in discharge mode;

Figure 7    self-discharge curves in the all-vanadium redox flow cell; and

Table 1 an overview of the properties of the different membranes of Examples 1-2 and Comparative Examples 1-3.

In the present invention, a potential low cost electrolyte membrane with improved barrier properties for redox-active species and conductivity comparable to that of Nafion® is disclosed. The polymer membrane comprises separate functional constituents to a) provide ionic charge carriers in the membrane and b) block the passage of redox-active species (Figure 2).

Figure 2 shows a sketch of the primary target of this invention: the electrolyte membrane shows selective transport for supporting (non-redox-active) common anions or cations in the negative and positive electrolyte solution, respectively, and inhibits the passage of redox-active species.

This invention discloses a method to introduce these functionalities into a pre-existing inert polymer base film by means of radiation-induced grafting. Radiation grafting is a versatile and scalable technique to modify a polymer substrate by forming a graft copolymer to introduce desirable properties into the material. Irradiation of the base film by ionizing radiation (gamma, electrons) introduces active sites, from which in the subsequent grafting reactions polymer chains are grown from a monomer or mixture of monomers amenable to radical induced polymerization. The monomer mixture may be a liquid solution or gaseous mixture of monomers and diluent(s). Post treatment of the grafted film may be necessary to modify the grafted moieties to obtain the final desired functionalities.

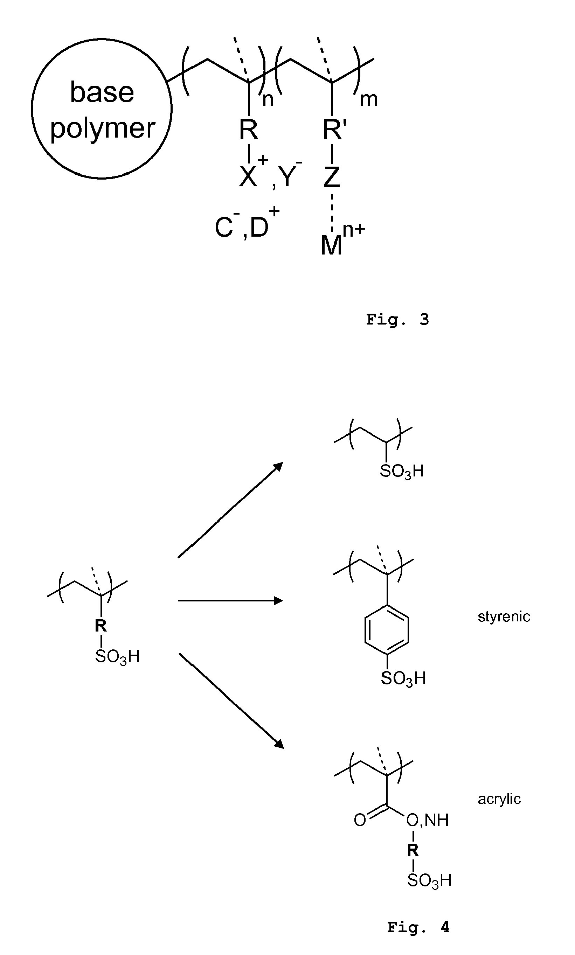

One ionomer constituent embodies the ionogenic component, for instance a sulfonic acid group, which upon swelling of the ionomer in water yields mobile protons and a fixed sulfonate anion, or a quaternary ammonium group, which represents a fixed cation, while the counter-ion ($HO^-$, $Cl^-$, $SO_4^{2-}$) is mobile in the water-swollen polymer (Figure 3). The density of charged sites determines the ion exchange capacity, which itselfs determines the conductivity of the ionomer.

Another ionomer constituent embodies a moiety that develops a strong interaction with one or several of the redox-active species in the electrolytes, for instance via complex formation (Figure 3). It is conceivable that the membrane may contain several types of blocking units for the different redox active species in the two electrolytes.

Figure 3 shows a schematic structure of the graft copolymer consisting of the inert base polymer and grafted functional units. R and R', respectively, is an alkyl or aryl organic rest or a combination thereof. $X^+$ and $Y^-$ are ionic groups fixed on the grafts (e.g., $-SO_3^-$), $C^-$ and $D^+$ the corresponding mobile ions (e.g., $H^+$). Z is a functional group blocking the passage of redox-active species $M^{n+}$ through the membrane by forming a coordination complex. n and m are molar fractions of respective monomer units in the grafts and vary between 10 and 90 %.

It is a key feature of the presented invention that the presence of the blocking units significantly increases the selectivity of ion transport in the membrane by reducing the crossover of redox-active species while the total conductivity is not or only insignificantly affected. In other words, the figure of merit of the membrane, defined as conductivity x selectivity, is enhanced in the presence of the blocking groups compared to the case where these are absent at an identical content of ionogenic units. The selectivity here describes the flux of non-redox-active species with respect to the total flux of ions through the membrane.

The electrolyte membrane may contain further constituents for specific purposes, such as crosslinker or antioxidants.

The present invention will now be described in detail with reference to a few preferred embodiments thereof. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

The electrolyte membrane described herein contains ion exchange groups, which upon swelling in water, will yield a mobile ion and a fixed counter-ion. This ionogenic group may be an acidic group, such as carboxylic acid, sulfonic acid (Figure 4), or phosphonic acid, which upon hydration yields mobile protons and fixed anions. In a preferred embodiment, the ionogenic group is a sulfonic acid group. Alternatively, the ionogenic group may be an acid salt, with the proton replaced by a metal ion, such as alkali metal ions. In another embodiment, the ionogenic group may be a cation exchange group, such as a quaternary ammonium, pyridinium, sulfonium, phosphonium, imidazolium, and guanidinium, with corresponding mobile anions, such as halide, (hydrogen)carbonate, (hydrogen)sulfate, and ((di)hydrogen)phosphate.

Figure 4 shows a schematic representation of the structure of the ionogenic group, which in the preferred embodiment is a sulfonic acid group.

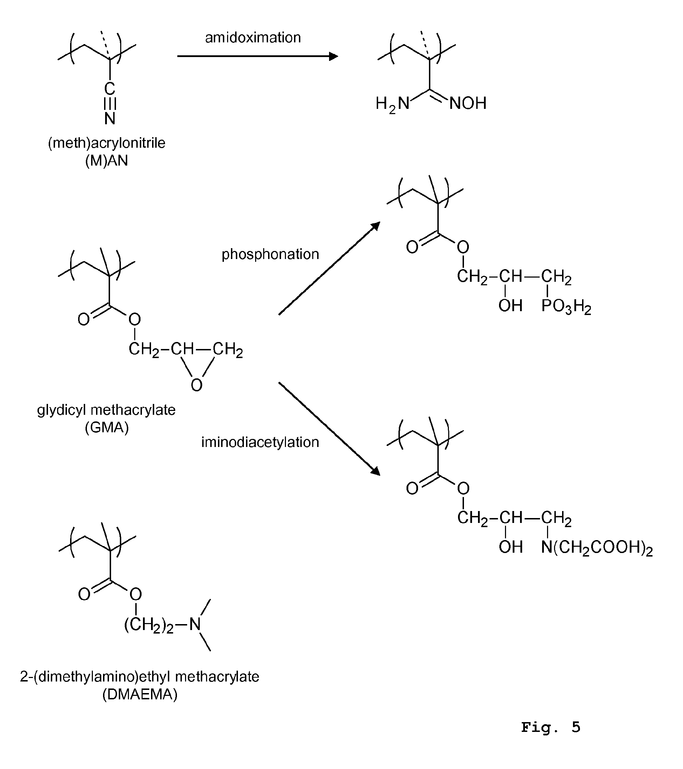

The content of fixed ionic species in the membrane governs the water uptake of the membrane when immersed in water or an electrolyte solution and the resulting ionic conductivity of the material. As an essential ingredient, the polymer electrolyte membrane incorporates functionalities that block the passage of the redox-active species present in the positive and/or negative electrolyte solution. In the embodiment described here, the blocking sites are functional groups forming a complex with redox-active species (chelating agent) by coordination interaction or sometimes ionic interaction. The binding of the redox-active species by the polymer thus significantly reduces their crossover through the membrane. The most common coordinating atoms present in the chelating groups are nitrogen, oxygen, phosphorus and sulfur. In a preferred embodiment, the redox-active species are transition metal ions. Examples of chelating groups are amidoxime, which is selective towards $Cu^{2+}$, $Ru^{6+}$, $Au^{3+}$, $Rh^{3+}$, $V^{4+}$, $Pd^{2+}$, $U^{6+}$, $Pt^{2+}$, $Fe^{3+}$, $Mo^{6+}$, $Ni^{2+}$, $Co^{2+}$, $Zn^{2+}$ and $Mn^{2+}$, iminodiacetate, which is selective towards $Hg^+$, $Cu^{2+}$, $UO_2^{2+}$, $Pb^{2+}$, $Fe^{3+}$, $Cr^{3+}$, $Ni^{2+}$, $Zn^{2+}$, $Co^{2+}$, $Fe^{2+}$ and $Mn^{2+}$, aminophosphonic acid, which is selective towards $U^{4+}$, $UO_2^{2+}$, $Fe^{3+}$, $Zn^{2+}$, $Cu^{2+}$, $Ni^{2+}$, $Co^{2+}$ and $Mn^{2+}$, thiol, which is selective towards $Cu^+$, $Pb^{2+}$, $Zn^{2+}$, $Ni^{2+}$ and $Fe^{3+}$, N-bis-picolylamine, which is selective towards $Ni^{2+}$ and $Co^{2+}$. Examples of blocking groups are given in Figure 5.

In the invention disclosed herein, these functional groups are introduced into a pre-existing yet inert polymer film by radiation induced graft copolymerzation of suitable monomers amenable to radical polymerization and, if necessary, suitable post-treatments to obtain the final functionalized and ion-conducting membrane. The radiation-grafted membrane may be prepared from a variety of base polymer films including fluoropolymers, such as PTFE, FEP, PFA, ETFE, PVDF, PVF, PCTFE, ECTFE, or polyolefins such as PE, PP and their copolymers, or polyamides, or polyesters. In a preferred embodiment, the base polymer film is a partially fluorinated polymer, such as ETFE, PVDF, or ECTFE or copolymers derived from these.

Figure 5 shows a schematic representation of the preferred structure of the blocking groups for redox-active transition-metal ion species, which are obtained either after post-functionalization of a suitable precursor monomer, such as in the case of (meth)acrylonitrile and glycidyl methacrylate, or directly through grafting of a monomer that already carries the functional group, such as in the case of 2-(dimethylamino)ethyl methacrylate.

Activation of the film is performed using ionizing radiation, such as gamma, hard x-rays, or electron beam. The film may be pre-irradiated or simultaneously radiated when the base polymer is exposed to the monomer mixture. In case of the pre-irradiation method, the irradiated substrate may be stored at reduced temperature and/or under inert atmosphere if the reactive sites are unstable. In a preferred embodiment, the base film is irradiated in air with a high energy (>100 keV) electron beam in air.

The physical form of the monomer for grafting may be as a gas or a liquid, and the monomer may be either pure or diluted with a solvent or inert material and/or as a mixture with one or more additional monomers. Any radically active monomer may be used including vinyl, styrenic or acrylic monomers. Monomers can be selected according to the properties that are desired for the membranes. To introduce ion exchange groups, monomers having acidic, basic, salt or amphoteric functionality or their precursors may be selected. Non-limiting examples of monomers having acidic, basic, salt, or amphoteric functionality include vinyl phosphonic acid, vinyl sulfonic acid, 2-acrylamido-2-methylpropane sulfonic acid, sodium styrene sulfonate, N-vinyl-2-pyrrolidone, 4-vinyl pyridine. Monomers that can be used as precursors for the introduction of acidic, basic, and amphoteric groups may also be used. Non-limiting examples include styrenic monomers such as styrene, $\alpha$-methylstyrene, $\alpha$, $\beta$,$\beta$-trifluorostyrene, $\alpha$-fluorostyrene, and vinylbenzyl chloride and their derivatives. The grafted polystyrenic chains derivatized in a subsequent step using methods known in the art to yield acidic, basic, or amphoteric functionalities in the membrane. For example, anion-exchange groups can be introduced by means of subsequent amination followed by ion exchange with aqueous hydroxide, and cation exchange groups can be introduced by treating with strong acids such as chlorosulfonic or sulfuric acids or sulfur trioxide dissolved in halogenated solvents or gaseous sulfur trioxide. In a preferred embodiment, the monomer is styrene or $\alpha$-methylstyrene, which after grafting is sulfonated in chlorosulfonic acid solution and subsequently hydrolyzed in water to obtain ($\alpha$-methyl)-styrene-sulfonic acid grafts.

The blocking groups, in the preferred embodiment chelating groups, are introduced via co-grafting of a suitable monomer with the primary ionomer yielding ionogenic groups. This monomer may yield the chelating group directly or after post-treatment. Examples of co-monomers are glycidyl methacrylate, (meth)acrylic acid, (meth)acrylamide, (meth)acrylonitrile, N-vinylpyrrolidone, 4-vinylpyridine, N-vinylformamide, and vinylbenzylchloride. Examples of post-treatment are amination, amidoximation, treatment with disodium iminodiacetate, quaternization, phosphonation, alkaline hydrolysis, and phosphonation. In a preferred embodiment, the co-monomer is (meth)-acrylonitrile, and the post-treatment amidoximation with hydroxylamine.

The ratio of the monomers, the ionogenic monomer and the blocking co-monomer, in the reaction mixture is adapted to adjust the ratio of the grafted monomer units in the graft copolymer according to the specific copolymerization behavior or the two monomers, which is governed by the radical copolymerization kinetics of the two monomers chosen according to the theory of Mayo and Lewis. Therefore, the tuning of the fraction of ionogenic monomer units and blocking monomer units in the grafts is quiet sensitive in order to achieved both the desired ion conductivity and the desired blocking.

In a preferred embodiment, styrene is co-grafted with acrylonitrile at a molar ratio of 2:3, which yields a molar fraction of styrene and acrylonitrile in the grafts of around 0.5, respectively. Through the choice of the ratio of ionogenic monomer units and blocking monomer units in the grafted chain, the transport properties of background (redox-inactive) species and redox-active species can be tuned. In one extreme case, only ionogenic units are present in the grafts, thus the retention properties for redox-active species are not pronounced. In the other extreme case, the grafts contain only chelating monomer units. In this case, the ionic conductivity of the membrane is expected to be very low.

In addition to the monomers mentioned above, i.e. monomers that yield fixed ionic sites and monomers that provide binding sites for redox-active species, additional monomers may be included in the monomer mixture for specific purposes. For instance, crosslinking monomers, such as divinyl benzene, bis(vinyl phenyl)ethane, diisopropenylbenzene, or diacrylates, can be used to modify the swelling or liquid crossover properties, or stability and durability of such membranes. In addition, monomer units carrying antioxidants may be incorporated into the grafted chain to protect the polymer from oxidative attack.

Examples

The following Examples and Comparative Examples are provided for the purpose of further illustrating the present invention but are in no way to be taken as limiting.

Example 1

ETFE base film (DuPont Tefzel® 100LZ, 25 $\mu$m thickness) was irradiated in air using an MeV class electron beam facility with a dose of 5 kGy and subsequently stored at -80 °C. The grafting reaction was performed in glass reactors under nitrogen atmosphere. The grafting reaction mixture was composed as follows: 20% (v/v) monomer solution (styrene/acrylonitrile at a volumetric ratio of 2/3) + 70% (v/v) iso-propanol + 10% (v/v) ultra-pure water. The ratio of styrene/acrylonitrile used corresponds to a molar fraction of styrene of 0.3 in the grafting solution, which yields a molar fraction of styrene in the grafted film of around 0.4. Irradiated films of size $7 \times 7$ cm were introduced into the grafting solution. The glass reactor containing the grafting solution containing and the irradiated films was sparged with $N_2$ for 1 h. Then, the reactor was placed in a thermostatic water bath held at 60°C for the duration of the grafting reaction. After removal of the films from the reactor, the grafted films were washed with acetone for 18 h and dried under vacuum at 80°C. The reaction time was adjusted such that a graft level, defined as the weight increase upon grafting with respect to the initial weight of the base film, of around 40 % was obtained.

Amidoximation of the nitrile groups of the grafted acrylonitrile (AN) units was performed in a small glass reactor using 2 M solution of hydroxylamine hydrochloride in $H_2O$/EtOH (volumetric ratio of $H_2O$/EtOH of 1:1). The pH value of the solution was adjusted to 7 by adding aqueous NaOH. Subsequently, the grafted films were introduced into the prepared solution and placed in a thermostatic water bath at 70°C for 6 days. FTIR analysis of the samples indicated that, whithin the error of the measurement, the nitrile groups have completely reacted.

Sulfonation of the grafted and amidoximated films was carried out in a 2 L glass reactor using a 3 % solution of chlorosulfonic acid in dichloromethane. Grafted films were introduced into the solution and gas bubbles adhering to the film were removed with a glass rod. After stirring for 6 h at room temperature the sulfonated films were removed from the reaction mixture, washed with ultra-pure water and hydrolyzed at 80°C in pure water for 16 h.

Example 2

Grafted films were prepared using styrene and acrylonitrile (AN) as monomers as described in Example 1. In this example, the grafted films were first sulfonated as described in Example 1, and then amidoximated. In contrast to Example 1, the amidoximation reaction was performed for 3 days, since the sulfonated membrane swells in the presence of the amidoximation reagent, which facilitates the access of the hydroxylamine to the AN units. In this case, FTIR analysis of the obtained membranes indicated the presence of carbonyl groups, which is a result of partial hydrolysis of the nitrile units of AN to the respective carboxylic acid during the sulfonation reaction. Therefore, the total amidoxime content of the membrane of Example 2 is lower than that of Example 1.

Comparative Example 1

The membrane of Comparative Example 1 is prepared according to the description of Example 2, except that the final amidoximation step is omitted. Therefore, the membrane does not contain any amidoxime groups, but carboxylic acid groups and residual nitrile groups.

Comparative Example 2

The membrane of Comparative Example 2 is prepared according to the procedure outlined above, yet without acrylonitrile in the reaction mixture. Therefore, the membrane only contains grafted styrene, which is subsequently sulfonated to yield poly(styrenesulfonic acid) (PSSA) grafts. The graft level of the membrane is 40%.

Comparative Example 3

Nafion® 212 membrane is used as Comparative Example 3. The membrane was pretreated by immersion in water.

Membrane Characterization

The membranes were characterized for their key properties in the context of the application in redox flow batteries.

The ohmic resistance of a redox flow cell is largely influenced by the conductivity of the membrane in the respective electrolyte solution(s). Therefore, the ohmic resistance was measured in an assembled all-vanadium redox flow cell at room temperature comprising carbon felt electrodes and the respective membrane as polymer electrolyte. A redox flow test system (Model 857) by Scribner Associates was used to operate the cell. Both the negative and the positive electrolyte compartment were filled with an aqueous solution containing 1 M $VOSO_4$ and 2 M $H_2SO_4$. The cell was charged at a constant cell potential of 1.6 V until the current decreased below 4 $mA/cm^2$. The change of the state of charge in both electrolyte compartments was visible as a change in the color of the solutions. The ohmic area specific resistance $R_\Omega$ of the cell was then determined from the intercept of the impedance spectrum in Nyquist representation with the real axis at the high frequency end.

The vanadium ion permeability at room temperature of prepared membranes was determined using self-made diffusion cells consisting of two round bottom flasks separated by the membrane. The left compartment was filled with a 1 M solution of $VOSO_4$ in 2 M $H_2SO_4$ while the right one was filled with 1 M solution of $MgSO_4$ in 2 M $H_2SO_4$. Solutions in both compartments were stirred in order to prevent concentration polarization at the membrane's surface. At regular time intervals the concentration of diffused $VO^{2+}$ ions in the right compartment was measured using UV-Vis spectroscopy. The diffusivity of vanadium-ions $D(V^{4+})$ was then determined from the dimensions of the membrane and the concentration gradient of vanadium between the two comparments.

Based on the ohmic resistance $R_\Omega$ and the vanadium diffusivity $D(V^{4+})$, the figure of merit (FOM) from the membrane was calculated according to $1/(R_\Omega \cdot D)$, which indicates the suitability of a membrane material for application in a redox flow cell. The higher the number, the more suitable the membrane. An ideal membrane should have low ohmic resistance as well as low metal-ion diffusivity.

Table 1 shows key properties of membranes for redox flow applications, consisting of ohmic resistance $R_\Omega$ in the vanadium redox flow cell and the diffusivity of vanadium(IV) $D(V^{4+})$ across the membrane, which are combined to the figure of merit (FOM). The amidoxime content is the fraction of grafts with amidoxime groups, the balance is (sulfonated) styrene, in case of Example 2 a residual carboxylic acid groups are present as a result of partial hydrolysis of the nitrile groups during sulfonation. The FOM of membrane variations showing superior characteristics compared to Nafion 212 membrane (Comparative Example 3) are evident.

An overview of the properties of the different membranes of Examples 1-2 and Comparative Examples 1-3 are shown in Table 1. Comparative Example 3 (Nafion 212) serves as a benchmark. Examples 1 and 2 have the same graft level and composition of styrene / AN grafts. Example 1 has the higher content of amidoxime groups because the grafted film was first amidoximated and then sulfonated. In case of Example 2, the film was sulfonated first, which leads to hydrolysis of a fraction of the nitrile groups.

Therefore, after the subsequent amidoximation, the amidoxime content in the final membrane is lower than that of Example 1. The result shows that Example 1 with a higher amidoxime content has better vanadium barrier properties. Comparative Example 1, which does not contain any amidoxime, shows an even higher vanadium crossover.

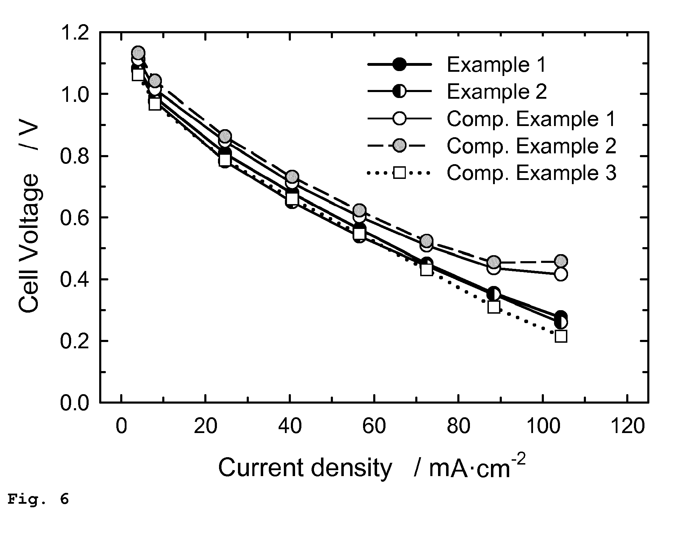

The polarization characteristics of the membranes of Examples 1 and 3, and Comparative Examples 1-3 were measured at room temperature in the redox flow single cell as described above (Figure 6). The current was increased stepwise and after 30 s the voltage of the cell was recorded. The initial state of charge of the cell was 100%. Example 1, i.e., the membrane with the highest amidoxime content, showed a performance similar to that of Example 2, which had a lower amidoxime content, and superior to that of Comparative Example 3, which is Nafion 212. Comparative Example 1 and Comparative Example 2 showed significantly better performance than the other tested membranes. Those membranes are styrene / acrylonitrile grafted and styrene-only grafted, respectively, and do not contain any amidoxime.

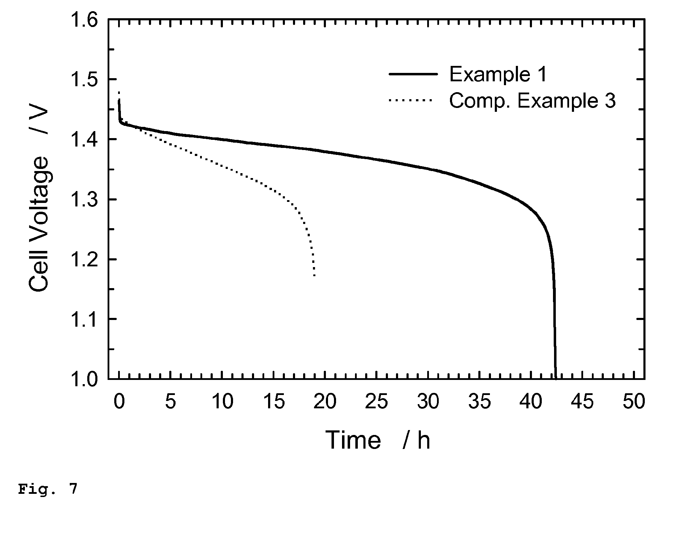

The vanadium crossover leads to slow self-discharge of the cell, if the cell is initially fully charged and then set to open circuit voltage. The time to complete self-discharge is therefore a measure of the vanadium-ion permeability through the membrane. In Figure 7, the self-discharge experiment of Example 1 (grafted membrane with highest amidoxime content) and Comparative Example 3 (Nafion 212) is shown. The cell of Comparative Example 3 is discharge after around 19 h, whereas the cell of Example 1 is discharged after around 42.5 h. The ratio of these two values is almost identical to the ratio of the vanadium-ion diffusivities of these two samples.

**Claims**

1. An ion exchange membrane with selective ion transport properties, in particular for use in a redox flow battery, comprising:

   a) a mechanically robust and chemically resistant base polymer film (matrix);
   b) ion exchange groups covalently bound to the polymer matrix, being anion exchange groups or cation exchange groups or a mixture thereof;
   c) blocking groups covalently bound to the polymer matrix preventing the passage of redox-active species across the membrane; and

d) optionally additional functional constituents, such as crosslinkers or antioxidants;

2. The membrane according to claim 1, wherein the membrane is produced via radiation induced grafting, comprising the steps of:

a) exposing the base polymer to ionizing radiation to introduce active sites;

b) exposing the irradiated base polymer to a mixture of monomers comprising i) a monomer containing an ion exchange group or a precursor monomer yielding an ion exchange group in a subsequent step, ii) a monomer containing a functional group to block the passage of redox-active species through the membrane or a precursor monomer yielding the functional blocking group in a subsequent reaction step; iii) optional additional monomers, such as a crosslinker and antioxidant; and

c) in case of the use of precursor monomers for ion exchange sites and blocking groups, post-treatment of the grafted film to introduce ion exchange sites and/or blocking groups is performed.

3. The membrane according to claim 1 or 2, wherein the base polymer is a semi-crystalline fluoropolymer.

4. The membrane according to any of the preceding claims, wherein the ionizing radiation is an electron beam with energy >100 keV.

5. The membrane according to any of the preceding claims, wherein the monomer used as a precursor monomer to yield ion exchange sites is styrene, $\alpha$-methylstyrene or vinylbenzylchloride.

6. The membrane according to any of the preceding claims, wherein the monomer used as a precursor monomer to yield blocking sites is acrylonitrile, methacrylonitrile or glycidylmethacrylate.

7. The membrane according to any of the preceding claims, wherein the ion exchange site is a sulfonic acid group, introduced to the styrenic grafted monomer units via sulfonation followed by hydrolysis.

8. The membrane according to any of the preceding claims, wherein the ion exchange site is a quaternary ammonium group, introduced to the vinylbenzyl chloride grafted monomer units via quaternization.

9. The membrane according to any of the preceding claims, wherein the blocking sites are created by amidoximation of acrylonitrile or methacrylonitrile units in the grafted chains.

10. The membrane according to any of the preceding claims, wherein the blocking sites are created by amination of glycicyl methacrylate units in the grafted chains.

11. The membrane according to any of the preceding claims, wherein the blocking sites are created by the reaction of glycicyl methacrylate units in the grafted chains with iminodiacetate, phosphoric acid, L-amino acid, or trialkylamine.

12. A redox flow battery, wherein the membrane of any of the preceding claims is used as a membrane electrolyte.

13. The redox flow battery according to claim 11, wherein the negative electrolyte solution consists of an aqueous solution of sulfuric acid as background electrolyte and $V^{2+}/V^{3+}$ as redox-active species, and wherein the positive electrolyte solution consists of an aqueous solution of sulfuric acid as background electrolyte and $VO^{2+}/VO_2^+$ as redox-active species.

14. The redox flow battery according to claim 11, wherein the membrane shows less crossover of redox-active species than a comparable membrane without blocking groups.

Fig. 1

Fig. 2

Fig. 3

styrenic

acrylic

Fig. 4

(meth)acrylonitrile
(M)AN

glydicyl methacrylate
(GMA)

2-(dimethylamino)ethyl methacrylate
(DMAEMA)

amidoximation

phosphonation

iminodiacetylation

Fig. 5

Fig. 6

Fig. 7

Europäisches
Patentamt

European
Patent Office

Office européen
des brevets

# EUROPEAN SEARCH REPORT

Application Number

EP 15 15 4151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/115504 A1 (LEE MYUNG-JIN [KR] ET AL) 9 May 2013 (2013-05-09) * paragraphs [0011] - [0028], [0052] - [0056], [0071] - [0073] * ----- | 1-14 | INV. H01M8/10 H01M8/18 |
| X | DE 10 2005 023897 A1 (VOLKSWAGEN AG [DE]) 30 November 2006 (2006-11-30) * paragraphs [0001], [0002], [0026], [0029], [0030] - [0032] * ----- | 1-11 | |

TECHNICAL FIELDS
SEARCHED       (IPC)

H01M

The present search report has been drawn up for all claims

| Place of search | Date of completion of the search | Examiner |
|---|---|---|
| Munich | 19 June 2015 | Götz, Heide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 15 15 4151

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2015

| Patent document cited in search report | Publication date | Patent family member(s) | Publication date |
|---|---|---|---|
| US 2013115504 A1 | 09-05-2013 | CN 103087452 A<br>EP 2590250 A1<br>JP 2013095918 A<br>KR 20130049077 A<br>US 2013115504 A1 | 08-05-2013<br>08-05-2013<br>20-05-2013<br>13-05-2013<br>09-05-2013 |
| DE 102005023897 A1 | 30-11-2006 | NONE | |

EPO FORM P0459

For more details about this annex : see Official Journal of the European Patent Office, No. 12/82